# EUROPEAN PATENT APPLICATION

(11) **EP 1 589 777 A1**
(43) Date of publication of application: **26.10.2005**
(21) Application number: 04701669.6
(22) Date of filing: 13.01.2004
(51) Int. Cl.: H04Q 7/38, H04L 12/28

(54) **UNITARY MANAGEMENT AUTHENTICATION DEVICE**

(30) Priority: 30.01.2003 JP 2003022039
(71) Applicant: MATSUSHITA ELECTRIC INDUSTRIAL CO., LTD., Kadoma-shi, Osaka 571-8501 (JP)
(72) Inventor: ISHII, Yoshikazu, Osaka 567-0046 (JP); KANEKO, Tomoharu, Kanagawa, 225-0024 (JP); KITO, Tsutomu, Kanagawa 226-0003 (JP); IWAMA, Tomohiro, Kanagawa 224-0001 (JP); UNO, Satoshi, Kanagawa, 224-0054 (JP)
(74) Representative: Grünecker, Kinkeldey, Stockmair & Schwanhäusser Anwaltssozietät
(86) International application number: PCT/JP2004/000136
(87) International publication number: WO 2004/068887

(57) **Abstract**

Respective location information of wireless terminal apparatuses 30-1 to 30-4 and service area information of each of wireless LAN networks 2-1 to 2-n is managed, and authentication information is notified to authentication apparatus 20 of a wireless LAN network before each wireless terminal apparatus moves to the wireless LAN network around the current location of the wireless terminal apparatus. The authentication time is thus shortened in migration inside the same wireless LAN network or between different wireless LAN networks of the wireless terminal apparatus, thereby reducing the interval required for handover, and as a result, quality deterioration does not occur such as packet loss due to the handover.

## Description

### Technical Field

The present invention relates to a centralized management authentication apparatus and wireless terminal authentication method for authenticating a wireless terminal apparatus to enable the wireless terminal apparatus to perform roaming between different wireless networks such as, a cellular wireless network and wireless local area network.

### Background Art

Conventionally, practically-used wireless communication systems have broadly been classified into two groups. One is a cellular wireless network typified by GSM (Global System for Mobile communications) and PDC (Personal Digital Cellular). The other one is a wireless local area network (hereinafter, referred to as a wireless LAN network) typified by IEEE802.11a/b and Hyper LAN2.

The cellular wireless network enables a wireless terminal apparatus to be used across a wide range, and is a dominant system as a speech communication system. However, the cellular wireless network may have problems with the capacity when a large number of users exist and thus the communication density is high, and therefore, is not able to support future large-capacity data transmission sufficiently. In contrast thereto, the wireless LAN network provides the transmission capacity of maximum 11Mbps in IEEE802.11b, and the transmission capacity of maximum 54Mbps in IEEE802.11a and Hyper LAN2, and is thus able to support future large-capacity data transmission adequately. However, the wireless LAN network is insufficient in Location management control available in the cellular wireless network, and makes it difficult using a wireless terminal apparatus across a wide range.

Meanwhile, wireless communication systems have been proposed that integrate different wireless networks typified by the cellular wireless network and wireless LAN network. As an example of the systems, there is a system described in Japanese Laid-Open Patent Publication H09-200825.

In such a wireless communication system, in order to achieve seamless roaming between different wireless networks, it is necessary to perform centralized management of authentication that is performed when a wireless terminal apparatus gains access to each wireless network.

However, in the case of performing centralized management of authentication on the entire wireless networks, since a wireless terminal apparatus needs to access an apparatus that performs the centralized management whenever the terminal moves between wireless networks, it takes time to authenticate, and there arise problems that the interval required for handover increases and that quality deterioration such as packet loss occurs. The problems become more remarkable, as the number of wireless networks increases and the scale becomes larger.

### Disclosure of Invention

It is an object of the present invention to provide a centralized management authentication apparatus and wireless terminal authentication method enabling reduction in time required for authentication that is performed when a wireless terminal apparatus moves between wireless networks.

The object is achieved by managing location information of a wireless terminal apparatus and service area information of each wireless network, and notifying at least one wireless network that provides communication services around a current location of the wireless terminal apparatus of authentication information required for authentication of the wireless terminal apparatus before the wireless terminal apparatus performs handover to move to the network.

### Brief Description of Drawings

FIG.1 is a block diagram illustrating an entire configuration of a wireless communication system according to Embodiment 1 of the present invention;
FIG.2 is a block diagram illustrating a schematic configuration of a location management apparatus provided on a cellular wireless network constituting part of the wireless communication system according to Embodiment 1 of the invention;
FIG.3 is a block diagram illustrating a schematic configuration of a centralized management authentication apparatus provided on the cellular wireless network constituting part of the wireless communication system according to Embodiment 1 of the invention;
FIG.4 is a block diagram illustrating a schematic configuration of an authentication apparatus provided on a wireless LAN network constituting part of the wireless communication system according to Embodiment 1 of the invention;
FIG.5 is a block diagram illustrating a schematic configuration of a wireless terminal apparatus usable in the wireless communication system according to Embodiment 1 of the invention;
FIG.6 is a block diagram illustrating an entire configuration of a wireless communication system according to Embodiment 2 of the present invention;
FIG.7 is a block diagram illustrating a schematic configuration of an authentication apparatus provided on a cellular wireless network constituting part of the wireless communication system according to Embodiment 2 of the invention;
FIG.8 is a block diagram illustrating a schematic configuration of a location management apparatus provided on the cellular wireless network constituting part of the wireless communication system according to Embodiment 2 of the invention; and
FIG.9 is a block diagram illustrating a schematic configuration of a wireless terminal apparatus usable in a wireless communication system according to Embodiment 3 of the invention.

### Best Mode for Carrying Out the Invention

Embodiments of the present invention will specifically be described below with reference to accompanying drawings.

### (Embodiment 1)

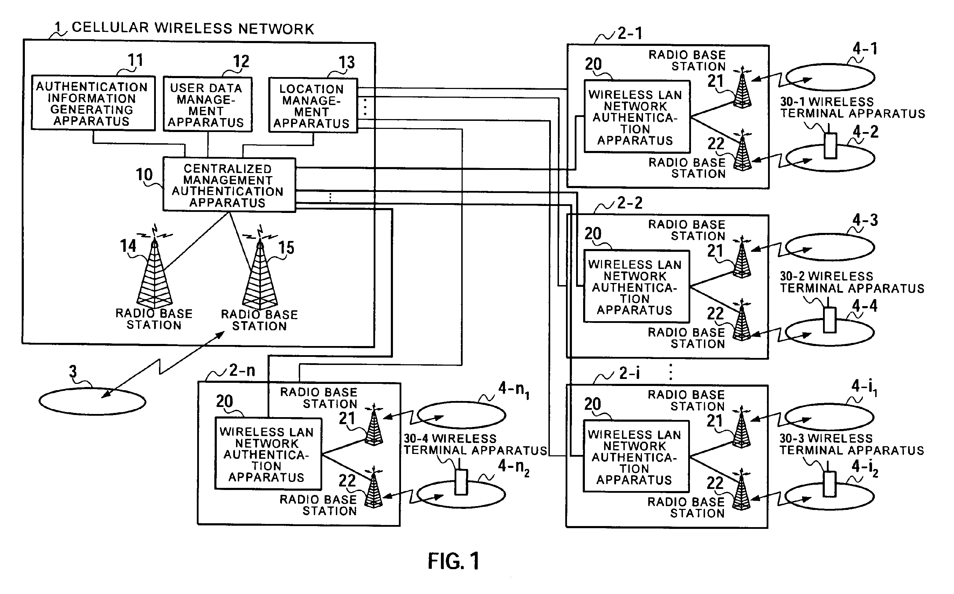

FIG.1 is a block diagram illustrating a configuration of a wireless communication system according to Embodiment 1 of the present invention.

The wireless communication system according to this Embodiment is obtained by combining a single cellular wireless network 1 and a plurality of wireless local area networks (hereinafter referred to as wireless LAN networks), 2-1, 2-2,..., 2-I,..., 2-n.

Cellular wireless network 1 is provided with centralized management authentication apparatus 10, authentication information generating apparatus 11, user data management apparatus 12, location management apparatus 13, radio base station 14 and radio base station 15. Centralized management authentication apparatus 10 performs centralized management of authentication of a wireless terminal apparatus performed on each of a plurality of wireless LAN networks, 2-1 to 2-n. Authentication information generating apparatus 11 generates authentication information to manage a wireless terminal apparatus. User data management apparatus 12 manages the detail of user contract such as a roaming contract. Location management apparatus 13 manages a current location of a wireless terminal apparatus. Each of radio base stations 14 and 15 provides communication services to a wireless terminal apparatus that moves into service area 3 of the base station.

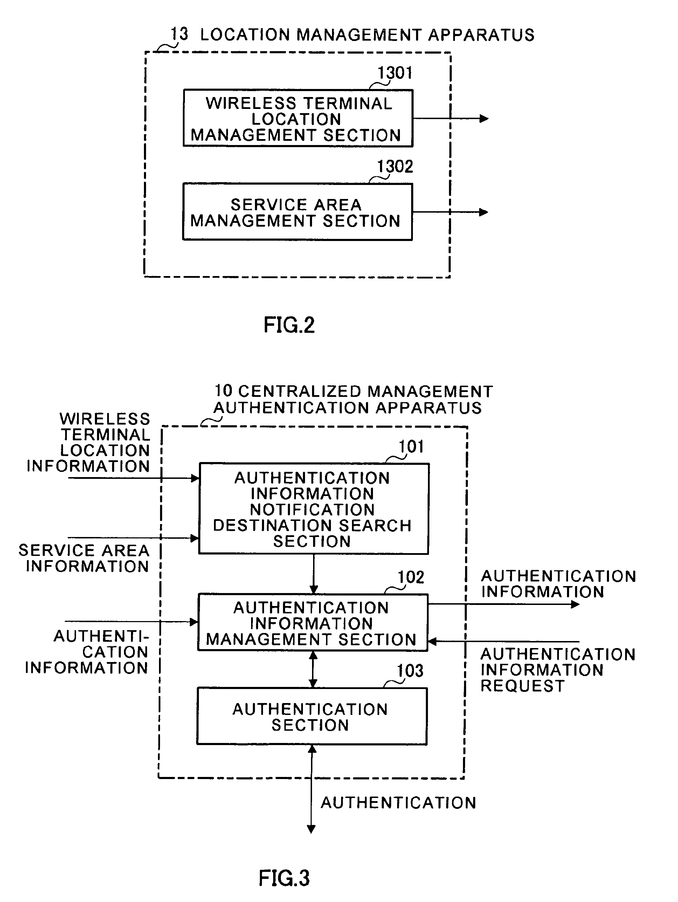

Location management apparatus 13 performs location management on a cellular-wireless-area basis, and as shown in FIG.2, is provided with wireless terminal location management section 1301 and service area management section 1302. Wireless terminal location management section 1301 manages a current location of each of wireless terminal apparatuses 30-1 to 30-4. Service area management section 1302 of location management apparatus 13 manages service area information of each of wireless LAN networks 2-1 to 2-n.

As shown in FIG.3, centralized management authentication apparatus 10 is provided with authentication information notification destination search section 101, authentication information management section 102 and authentication section 103. Authentication information notification destination search section 101 acquires the wireless terminal location information and service area information managed in location management apparatus 13, and thereby searches for a wireless LAN network having a service area around a current location of a wireless terminal apparatus. Then, authentication information notification destination search section 101 notifies authentication information management section 102 of the searched wireless LAN network. Authentication information management section 102 notifies the wireless LAN network searched by authentication information notification destination search section 101 of the authentication information acquired from authentication information generating apparatus 11. In other words, authentication information management section 102 notifies the authentication information to the wireless LAN network having a service area around the current location of the wireless terminal apparatus.

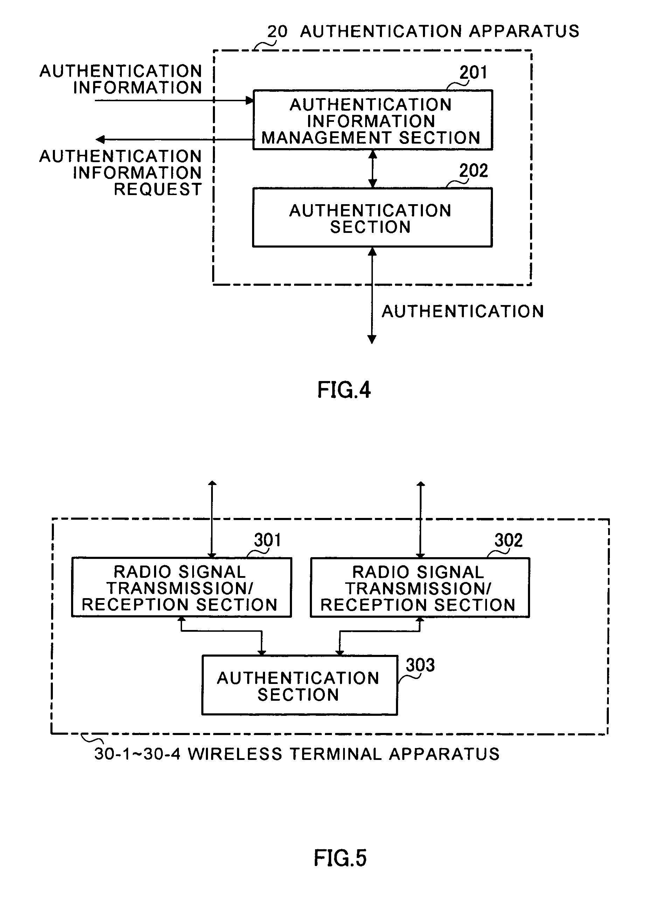

Each of wireless LAN networks 2-1 to 2-n is comprised of authentication apparatus 20 and radio base stations 20 and 21. As shown in FIG.4, authentication apparatus 20 is provided with authentication information management section 201 and authentication section 202. Authentication information management section 201 manages authentication in formation of a wireless terminal apparatus, requests the authentication information to centralized management authentication apparatus 10 of cellular wireless network 1, and thereby manages the authentication information notified from centralized management authentication apparatus 10. Authentication section 202 receives an authentication request signal from a wireless terminal apparatus, and thereby checks whether the authentication information of the wireless terminal apparatus is stored in authentication information management section 201. When the authentication information is stored in authentication information management section 201, authentication section 202 performs authentication processing according the authentication algorithm. In contrast thereto, when the authentication information is not stored in authentication information management section 201, authentication information management section 201 transmits an authentication information request to centralized management authentication apparatus 10 of cellular wireless network 1, and acquires the authentication information.

As shown in FIG.1, each of radio base stations 21 and 22 of each of wireless LAN networks 2-1 to 2-n manages a single service area. In other words, on wireless LAN network 2-1, radio base station 21 manages service area 4-1, while radio base station 22 manages service area 4-2. On wireless LAN network 2-2, radio base station 21 manages service area 4-3, while radio base station 22 manages service area 4-4. On wireless LAN network 2-i, radio base station 21 manages service area 4-i1, while radio base station 22 manages service area 4-i2. On wireless LAN network 2-n, radio base station 21 manages service area 4-n1, while radio base station 22 manages service area 4-n2.

As shown in FIG.5, each of wireless terminal apparatuses 30-1 to 30-4 is provided with two radio signal transmission/reception sections, 301 and 302, and authentication section 303. Radio signal transmission/reception section 301 communicates with cellular wireless network 1, and performs processing for establishing a wireless channel with radio base station 14 or 15 of the network 1 in performing communications. Meanwhile, radio signal transmission/reception section 302 communicates with wireless LAN networks 2-1 to 2-n.

Authentication section 303 exchanges the authentication information with authentication section 103 of centralized management authentication apparatus 10 on cellular wireless network 1. Authentication section 303 has a non-public authentication key common to authentication section 103 of centralized management authentication apparatus 10, and using the authentication key, exchanges the authentication information based on the same authentication algorithm. The authentication information is obtained from authentication information generating apparatus 11 of cellular wireless network 1, and managed in authentication information management section 102 of centralized management authentication apparatus 10.

In the wireless communication system thus obtained by combining cellular wireless network 1 and a plurality of wireless LAN networks, 2-1 to 2-n, wireless terminal apparatuses 30-1 to 30-4 move inside service areas of cellular wireless network 1, and inside service areas 4-1, 4-2, ..., 4-i1, 4-i2,..., 4-n1 and 4-n2 managed by radio base stations 21 or 22 of wireless LAN networks 2-1 to 2-n.

Explained below is authentication of wireless terminal apparatuses 30-1 to 30-4 in the wireless communication system according to this Embodiment. In addition, in this explanation, the case of authenticating wireless terminal apparatus 30-1 is described as one example.

Described first is authentication operation in the case of switching the power supply of wireless terminal apparatus 30-1 from off to on.

When wireless terminal apparatus 30-1 connects to cellular wireless network 1, radio signal transmission/reception section 301 of wireless terminal apparatus 30-1 performs processing for establishing a wireless channel with radio base station 14 or 15 of cellular wireless network 1, and then, according to the authentication algorithm, authentication section 303 of wireless terminal apparatus 30-1 exchanges an authentication signal with centralized management authentication apparatus 10 of cellular wireless network 1 and performs authentication.

Meanwhile, when wireless terminal apparatus 30-1 connects to wireless LAN network 2-1, 2-2,..., 2-i,... or 2-n (hereinafter, the case of connecting to wireless LAN network 2-1 is described as an example), radio signal transmission/reception section 302 of wireless terminal apparatus 30-1 performs processing for establishing a wireless channel with radio base station 21 or 22 of wireless LAN network 2-1, and then, wireless terminal apparatus 30-1 gains access to authentication apparatus 20 of wireless LAN network 2-1. At this point, wireless terminal apparatus 30-1 transmits an ID (identification information) of the apparatus 30-1 to let the apparatus 20 know which wireless terminal apparatus requests access.

In authentication apparatus 20 of wireless LAN network 2-1, authentication section 202 receives an authentication request signal from wireless terminal apparatus 30-1, and checks whether authentication information management section 201 manages a series of authentication information of wireless terminal apparatus 30-1. When the section 201 does not manage the authentication information, authentication information management section 201 transmits an authentication information request to centralized management authentication apparatus 10 of cellular wireless network 1, and acquires the authentication information of wireless terminal apparatus 30-1. When authentication information management section 201 acquires the authentication information, authentication section 202 exchanges an authentication signal with wireless terminal apparatus 30-1 and performs authentication according to the same authentication algorithm as in authentication on cellular wireless network 1.

Authentication when wireless terminal apparatus 30-1 moves will be described below.

Explained first is authentication when wireless terminal apparatus 30-1 moves inside the same wireless LAN network.

Authentication is required whenever the service area is varied (i.e. whenever the radio base station to connect is varied) also when wireless terminal apparatus 30-1 moves inside the same wireless LAN network, 2-1. Authentication apparatus 20 of wireless LAN network 2-1 stores the authentication information acquired from centralized management authentication apparatus 10 of cellular wireless network 1 when wireless terminal apparatus 30-1 has first connected to wireless LAN network 2-1, and wireless terminal apparatus 30-1 thereby completes the authentication only by gaining access to authentication apparatus 20.

In other words, when wireless terminal apparatus 30-1 is turned on and first gains access to wireless LAN network 2-1, the apparatus 30-1 performs authentication by accessing centralized management authentication 10 of cellular wireless network 1 via authentication apparatus 20 of wireless LAN network 2-1. Thereafter, in migration inside the same wireless LAN network, 2-1, wireless terminal apparatus 30-1 performs authentication by gaining access to authentication apparatus 20 of wireless LAN network 2-1.

Authentication when wireless terminal apparatus 30-1 moves to a different wireless LAN network will be described below.

Authentication is performed as described below when wireless terminal apparatus 30-1 moves to an adjacent different wireless LAN network. First, a current location of wireless terminal apparatus 30-1 is detected by location management function on a cellular-wireless-area basis of cellular wireless network 1. The detected current location of wireless terminal apparatus 30-1 is managed in wireless terminal location management section 1301 (see FIG.2) of location management apparatus 13. In addition, service area management section 1302 manages the service area information of each of wireless LAN networks 2-1 to 2-n.

In centralized management authentication apparatus 10 of cellular wireless network 1, authentication information notification destination search section 101 acquires location information of the wireless terminal apparatus and the service area information of each of wireless LAN networks 2-1 to 2-n managed in location management apparatus 13 of cellular wireless network 1, and based on the information, identifies a wireless LAN network having a service area around the current location of wireless terminal apparatus 30-1. Then, authentication information notification destination search section 101 notifies authentication information management section 102 of the identified wireless LAN network. By receiving the notification, authentication information management section 102 notifies the authentication information to authentication apparatus 20 of the wireless LAN network having the service area around the current location of wireless terminal apparatus 30-1.

Herein, for example, assuming that authentication information management section 102 notifies the authentication information to authentication apparatus 20 of wireless LAN network 2-2, in authentication apparatus 20 of the network 2-2, authentication information management section 201 manages the notified authentication information. By this means, also when wireless terminal apparatus 30-1 moves to an adjacent wireless LAN network, 2-2, wireless terminal apparatus 30-1 is able to complete authentication only by accessing authentication apparatus 20 on wireless LAN network 2-2. Since the time required for authentication is thus reduced, it is possible to shorten the handover interval. In addition, a case may occur that a plurality of wireless LAN networks exists which has the service area around the current location of wireless terminal apparatus 30-1. In such a case, the authentication information is notified to authentication apparatuses 20 of all the wireless LAN networks.

When wireless terminal apparatus 30-1 moves to a service area of some wireless LAN network from service area 3 of cellular wireless network 1, as in migration between different wireless LAN networks, authentication information notification destination search section 101 identifies a wireless LAN network having a service area around the current location of wireless terminal apparatus 30-1, and authentication information management section 102 beforehand notifies the authentication information to authentication apparatus 20 of the wireless LAN network, whereby it is possible to reduce the time required for authentication. Further, also when wireless terminal apparatus 30-1 performing communications via cellular wireless network 1 enters a service area of a wireless LAN network existing on cellular wireless network 1 and switches to the wireless LAN network to perform communications, as in migration between different wireless LAN networks, authentication information notification destination search section 101 identifies a wireless LAN network having a service area around the current location of the wireless terminal apparatus, and authentication information management section 102 beforehand notifies the authentication information to authentication apparatus 20 of the wireless LAN network, whereby it is possible to reduce the time required for authentication.

Moreover, when wireless terminal apparatus 30-1 moves from some wireless LAN network to cellular wireless network 1 or moves inside cellular wireless network 1, according to the general authentication sequence performed in the location registration sequence on cellular wireless network 1, authentication is performed between authentication section 303 of the wireless terminal apparatus and authentication section 103 of centralized management authentication apparatus 10 of cellular wireless network 1. Naturally, when wireless terminal apparatus 30-1 moves between different types of networks or different providers, after mutually checking whether roaming is supported, the authentication information is notified. User data management apparatus 12 stores the detail of user contract such as a roaming contract.

The aforementioned notification of the authentication information from centralized management authentication apparatus 10 to authentication apparatus 20 of each of wireless LAN networks 2-1 to 2-n is only performed when a wireless terminal apparatus first gains access to each of wireless LAN networks 2-1 to 2-n, but the once notified information is not used semi permanently. In order to enhance security of a wireless channel on the wireless LAN network, it is desired changing an encryption key of the wireless channel at constant intervals. Accordingly, it is desired that centralized management authentication apparatus 10 notifies the authentication information including an encryption key of a wireless channel whenever a wireless terminal apparatus gains access to each wireless LAN network, or at constant intervals.

Thus, according to Embodiment 1 of the invention, by managing the location information of a wireless terminal apparatus and the service area information of each of wireless LAN networks 2-1 to 2-n, and beforehand notifying the authentication information to a wireless LAN network around a current location of the wireless terminal apparatus before the terminal moves to the wireless LAN network, the authentication time is shortened in migration of the wireless terminal apparatus on the same wireless LAN network or between different wireless LAN networks, the interval required for handover is thereby reduced, and thus, quality deterioration due to the handover does not occur such as packet loss.

### (Embodiment 2)

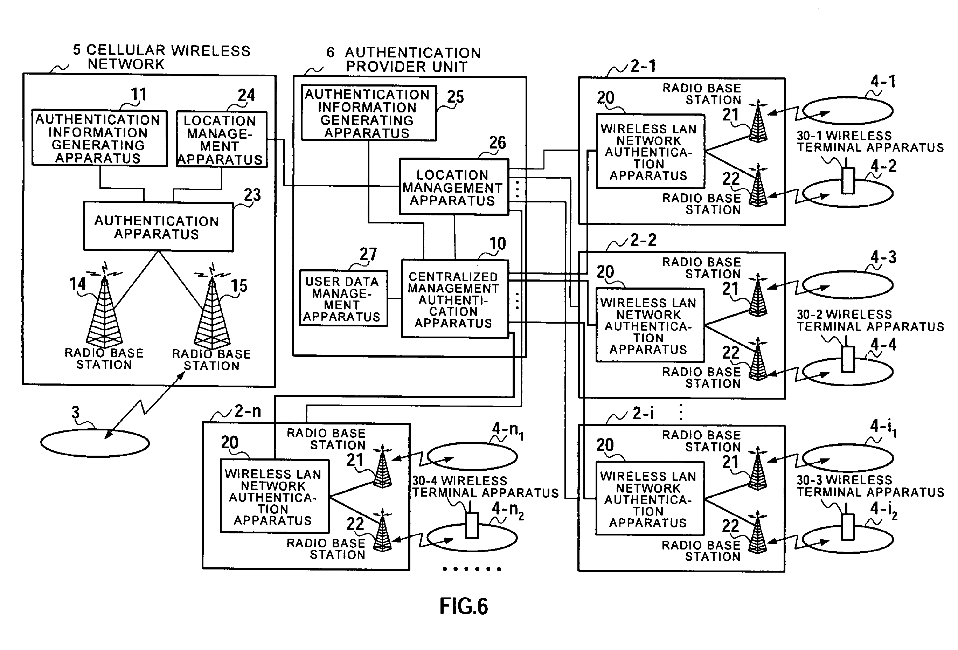

FIG.6 is a block diagram illustrating an entire configuration of a wireless communication system according to Embodiment 2 of the present invention. In addition, in Embodiment 2 of the invention, the same structural elements as in Embodiment 1 of the invention are assigned the same reference numerals to omit descriptions thereof.

In a wireless communication system according to this Embodiment, centralized management authentication apparatus 10 is installed in a service provider unit (herein, called authentication provider unit) that performs centralized management of authentication on the entire network, while centralized management authentication apparatus 10 is installed on cellular wireless network 1 in the above-mentioned wireless communication system according to Embodiment 1.

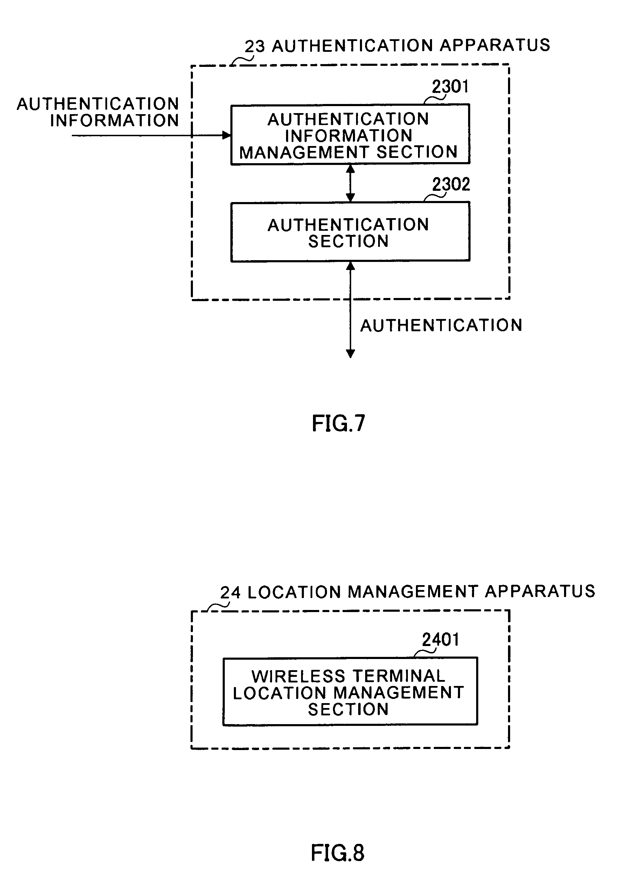

In FIG.6, cellular wireless network 5 is provided with authentication apparatus 23, authentication information generating apparatus 11, location management apparatus 24, radio base station 14 and radio base station 15. Authentication provider unit 6 has centralized authentication management apparatus 10, authentication information generating apparatus 25, location management apparatus 26 and user data management apparatus 27. As in Embodiment 1, each of wireless LAN networks 2-1 to 2-n is provided with authentication apparatus 20, radio base station 21 and radio base station 22. As shown in FIG.7, authentication apparatus 23 is provided with authentication information management section 2301 and authentication section 2302 . As shown in FIG. 8, location management apparatus 24 is provided with wireless terminal location management section 2401 that manages location of wireless terminal apparatuses.

Explained below is authentication of wireless terminal apparatuses in the wireless communication system according to this Embodiment. In addition, in this explanation, the case of authenticating wireless terminal apparatus 30-1 is described as one example.

Described first is authentication in the case of switching the power supply of wireless terminal apparatus 30-1 from off to on to connect to a network.

When wireless terminal apparatus 30-1 connects to cellular wireless network 5, in wireless terminal apparatus 30-1, radio signal transmission/reception section 301 (see FIG.5) to connect to cellular wireless network 5 performs processing for establishing a wireless channel with radio base station 14 or 15 of cellular wireless network 5, and then, authentication section 303 exchanges authentication information with authentication apparatus 23 (see FIG.7) installed on cellular wireless network 5. The authentication is carried out in the same authentication procedures as in Embodiment 1.

Meanwhile, when wireless terminal apparatus 30-1 connects to wireless LAN network 2-1, radio signal transmission/receptionsection 302 (see FIG.4) to connect to wireless LAN network 2-1 performs processing for establishing a wireless channel with radio base station 21 or 22 of wireless LAN network 2-1, and then, wireless terminal apparatus 30-1 gains access to authentication apparatus 20 of wireless LAN network 2-1. At this point, wireless terminal apparatus 30-1 transmits an ID of the apparatus 30-1 to let the apparatus 20 know which wireless terminal apparatus requests access.

In authentication apparatus 20, as shown in FIG.4, authentication section 202 receives an authentication request signal, and checks whether authentication information management section 201 stores a series of authentication information of wireless terminal apparatus 30-1 that has requested authentication. When the section 201 does not store the information, authentication apparatus 20 transmits an authentication information request to centralized management authentication apparatus 10 of authentication provider unit 6, and acquires the authentication information to authenticate. Herein, used as the authentication algorithm is one standardized in wireless LAN systems (such as, IEEE802. IX).

In this Embodiment, it is possible to use specific authentication algorithms in access to cellular wireless network 5 and access to wireless LAN networks 2-1 to 2-n. Naturally, it is also possible that the same algorithm is used as authentication algorithms in cellular wireless network 5 and wireless LAN networks 2-1 to 2-n, and that the authentication provider performs centralized management of the authentication information, and notifies the information to authentication apparatus 23 of cellular wireless network 5 from centralized management authentication apparatus 10.

Authentication when wireless terminal apparatus 30-1 moves will be described below.

Authentication to connect is required whenever the service area is varied (i.e. whenever the radio base station to connect is varied) also when wireless terminal apparatus 30-1 moves inside the same wireless LAN network. As in Embodiment 1, authentication apparatus 20 stores the authentication information acquired from centralized management authentication apparatus 10 when wireless terminal apparatus 30-1 has first connected to the wireless LAN network, and wireless terminal apparatus 30-1 thereby completes the authentication only by gaining access to authentication apparatus 20. In other words, when wireless terminal apparatus 30-1 is turned on and first gains access to a wireless LAN network, the terminal apparatus 30-1 gains access to centralized management authentication apparatus 10 of authentication provider unit 6 via authentication apparatus 20 of the wireless LAN network. Thereafter, in migration inside the same wireless LAN network, wireless terminal apparatus 30-1 gains access to authentication apparatus 20.

With respect to authentication when wireless terminal apparatus 30-1 moves to an adjacent different wireless LAN network, in authentication provider unit 6, location management apparatus 26 uses the location management function on a cellular-area basis of cellular wireless network 5, and acquires a location position of the wireless terminal apparatus. In other words, location management apparatus 26 of authentication provider unit 6 acquires the current location of the wireless terminal apparatus from location management apparatus 24 of cellular wireless network 5. Then, location management apparatus 26 manages the location information of the wireless terminal apparatus, as well as the service area information of each of wireless LAN networks 2-1 to 2-n.

In centralized management authentication apparatus 10, authentication information notification destination search section 101 (see FIG.3) acquires the location information of the wireless terminal apparatus and the service area information of each of wireless LAN networks 2-1 to 2-n from location management apparatus 26, and based on the information, identifies a wireless LAN network having a service area around the current location of wireless terminal apparatus. Then, centralized management authentication apparatus 10 notifies authentication information management section 102 (see FIG.3) of the identified wireless LAN network. Authentication information management section 102 notifies the authentication information to authentication apparatus 20 of the wireless LAN network to be notified. Authentication apparatus 20 stores the notified authentication information. By this means, also when wireless terminal apparatus 30-1 moves to an adjacent wireless LAN network, wireless terminal apparatus 30-1 is able to complete authentication only by accessing authentication apparatus 20 on the wireless LAN network, and it is thus possible to reduce the time required for authentication and the handover interval.

When wireless terminal apparatus 30-1 moves to a service area of some wireless LAN network from service area 3 of cellular wireless network 5, as in movement between different wireless LAN networks, authentication information notification destination search section 101 of centralized management authentication apparatus 10 identifies a wireless LAN network having a service area around the current location of the wireless terminal apparatus, and authentication information management section 102 of centralized management authentication apparatus 10 beforehand notifies the authentication information to the authentication apparatus of the wireless LAN network. Therefore, the time required for authentication can be decreased, and it is thus possible to reduce the handover interval. Further, also when wireless terminal apparatus 30-1 performing communications via cellular wireless network 5 enters a service area of a wireless LAN network existing on cellular wireless network 5 and switches to the wireless LAN network to perform communications, as in movement between different wireless LAN networks, authentication information notification destination search section 101 of centralized management authentication apparatus 10 identifies a wireless LAN network having a service area around the current location of the wireless terminal apparatus, and authentication information management section 102 of centralized management authentication apparatus 10 beforehand notifies the authentication information to the authentication apparatus of the wireless LAN network. Therefore, the time required for authentication can be reduced, and it is thus possible to decrease the handover interval.

Moreover, when wireless terminal apparatus 30-1 moves from some wireless LAN network to the cellular wireless network or moves inside the cellular wireless network, according to the general authentication sequence performed in the location registration sequence on the cellular wireless network, authentication is performed between the authentication section of the wireless terminal apparatus and the authentication section of the centralized management authentication apparatus. Naturally, when wireless terminal apparatus 30-1 moves between different types of networks or different providers, after mutually checking whether roaming is supported, the authentication information is notified. User data management apparatus 27 stores the detail of user contract such as a roaming contract.

The aforementioned notification of the authentication information from centralized management authentication apparatus 10 to authentication apparatus 20 of each of wireless LAN networks 2-1 to 2-n is not limited to first access of wireless terminal apparatus 30-1 to each wireless LAN network. In order to enhance security of a wireless channel on the wireless LAN network, it is desired changing an encryption key of the wireless channel at constant intervals. Accordingly, it is desired that centralized management authentication apparatus 10 notifies the authentication information including an encryption key of a wireless channel whenever a wireless terminal apparatus gains access to each wireless LAN network, or at constant intervals.

Thus, according to Embodiment 2 of the invention, the centralized management apparatus 10 of the wireless communication system according to this Embodiment is installed in the service provider equipment that performs centralized management of authentication on the entire network, whereby the authentication time is shortened in migration of a wireless terminal apparatus inside the same wireless LAN network or between different wireless LAN networks, the interval required for handover is thereby reduced, and thus, quality deterioration due to the handover does not occur such as packet loss.

### (Embodiment 3)

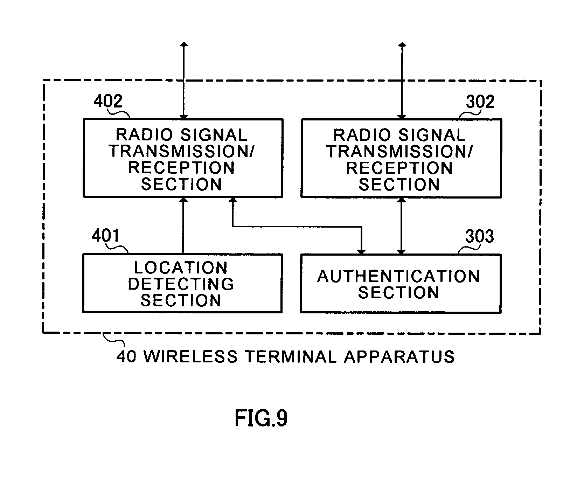

As shown in a block diagram of FIG.9, in a wireless communication system according to Embodiment 3 of the invention, wireless terminal apparatus 40 is provided with location detecting section 401 using GPS (Global Positioning System), and always notifies its current location to location management apparatus 13 on cellular wireless network 1.

In the above-mentioned wireless communication systems according to Embodiments 1 and 2, the location management function of cellular wireless networks 1 and 5 used in location information of wireless terminal apparatuses 30-1 to 30-4 serves on an area basis on the cellular wireless network, and has the accuracy of the order of a few kilometers. In contrast thereto, location detecting section 401 using GPS has the accuracy of the order of a few tens of meters, and is capable of performing location detection of a wireless terminal apparatus with highaccuracy. By this means, thewirelesscommunication system according to this Embodiment is capable of narrowing a search for a wireless LAN network having a service area around a current location of a wireless terminal apparatus, thereby reducing the number of wireless LAN networks to notify to authentication information, and further reducing the traffic of control signal such as the authentication information on the entire network.

### (Embodiment 4)

In a wireless communication system according to Embodiment 4 of the invention, radio base station 21 or 22 of each of wireless LAN networks 2-1 to 2-n is provided with a location detecting section (not shown in the figure) such as GPS, and notifies location management apparatus 13 of a service area of each of wireless LAN networks 2-1 to 2-n whenever necessary to update. By this means, in the wireless communication system according to this Embodiment, it is possible to update to the latest information due to expansion of the service area of each of wireless LAN networks 2-1 to 2-n caused by installation of a new radio base station, and to reflect in advance notification of authentication information.

As described above, according to the invention, the location information of a wireless terminal apparatus and the service area information of each wireless network is managed, and the authentication information is beforehand notified to a peripheral wireless network before the wireless terminal apparatus moves to the wireless network around a current location of the wireless terminal apparatus. The authentication time is thus shortened in migration inside the same wireless network or between different wireless networks of the wireless terminal apparatus, thereby reducing the interval required for handover, and as a result, quality deterioration does not occur such as packet loss due to the handover.

According to an aspect of the invention, a centralized management authentication apparatus performs centralized management of authentication to enable a wireless terminal apparatus to perform roaming on a plurality of wireless networks each having at least one radio base station, and adopts a configuration provided with an information acquirer that acquires service area information of each of the plurality of wireless networks and information of a current location of the wireless terminal apparatus, an authentication information notification destination searcher that specifies at least one of the wireless networks that provides communication services in a peripheral area of the current location of the wireless terminal apparatus based on the acquired service area information and information of the current location, and an authentication information manager that notifies authentication information required for authentication of the wireless terminal apparatus to at least one of the wireless networks specified in the authentication information notification destination searcher before the wireless terminal apparatus moves to the at least one of the wireless networks. According to this configuration, at least one wireless network is specified that provides communication services on the periphery of the current location of the wireless terminal apparatus based on the current location of the wireless terminal apparatus and the service area information of each of wireless networks, and the authentication information for use in authentication of the wireless terminal apparatus is notified to the specified at least one wireless network before the wireless terminal apparatus moves to the wireless network. The authentication time is thus shortened in migration of the wireless terminal apparatus inside the same wireless LAN network or different wireless LAN networks, thereby reducing the interval required for handover, and quality deterioration does not occur such as packet loss due to the handover.

According to another aspect of the invention, a configuration is adopted in the above-mentioned configuration, where among the plurality of wireless networks exists a cellular wireless network provided with the function of managing the location of the wireless terminal apparatus, and the authentication information notification destination searcher acquires the information of the current location of the wireless terminal apparatus from the cellular wireless network. According to this configuration, the cellular wireless network has the function of identifying the current location of the wireless terminal apparatus based on a cellular-area basis, and using the function, the authentication information notification destination searcher is able to acquire the current location of the wireless terminal apparatus.

According to another aspect of the invention, a configuration is adopted in the above-mentioned configuration where the authentication information notification destination searcher acquires the service area information of each of the wireless networks from the cellular wireless network. According to this configuration, it is possible to acquire the service area information of each of wireless networks from the cellular wireless network.

According to another aspect of the invention, a configuration is adopted in the above-mentioned configuration where the authentication information manager notifies the wireless network that requests the authentication information of the authentication information generated by an authentication information generating apparatus of the cellular wireless network. According to this configuration, the wireless network is given the authentication information, and thereby able to use the information for authentication in migration of the wireless terminal apparatus between service areas on the wireless network. It is thus possible to reduce the processing time for authentication in migration on the same wireless network.

According to another aspect of the invention, a configuration is adopted in the above-mentioned configuration where a location management apparatus of the cellular wireless network manages each of the service area information and wireless terminal location information, and based on each of the service area information and wireless terminal location information managed by the location management apparatus of the cellular wireless network, the authentication information notification destination searcher specifies at least one of the wireless networks that provides communication services in a peripheral area of the current location of the wireless terminal apparatus. According to this configuration, by using the service area information and wireless terminal location information managed by the location management apparatus of the cellular wireless network, it is possible to easily specify at least one of the wireless networks that provides communication services in a peripheral area of the current location of the wireless terminal apparatus.

A cellular wireless network of another aspect of the invention adopts a configuration provided with the centralized management authentication apparatus having the above-mentioned configuration. According to this configuration, it is possible to provide a cellular wireless network where the authentication time is reduced in migration of the wireless terminal apparatus inside the same wireless LAN network or different wireless LAN networks, and quality deterioration does not occur such as packet loss due to handover between wireless networks.

An authentication apparatus of another aspect of the invention adopts a configuration provided with an authentication information holder that holds authentication information obtained by making a request for authentication information to a centralized management authentication apparatus that performs centralized management of authentication in movement to each of a plurality of wireless networks of a wireless terminal apparatus, and an authentication performer that uses the authentication information held in the authentication information holder in authentication of the wireless terminal apparatus in a service area of a movement destination when the wireless terminal apparatus moves between service areas of a wireless network to which the authentication apparatus belongs. According to this configuration, it is possible to use the authentication information in authentication in a movement destination when the wireless terminal apparatus moves between service areas of the wireless network by acquiring the authentication information from the centralized management authentication apparatus, and it is thus possible to reduce the processing time required for authentication in migration on the same wireless network.

A wireless terminal apparatus of another aspect of the invention adopts a configuration provided with a receiver that receives a signal transmitted from a GPS (Global Positioning System) satellite, a current location measure that measures a current location using the signal received from the GPS satellite, and a current location information notifier that notifies a cellular wireless network of the current location measured in the current location measurer. According to this configuration, the cellular wireless network is capable of acquiring location information with high accuracy, thus decreasing the number of wireless networks of notification destination of authentication information, and thereby reducing processing time to notify the authentication information.

A radio base station of another aspect of the invention is a radio base station constituting a wireless network and adopts a configuration provided with a receiver that receives a signal transmitted from a GPS (Global Positioning System) satellite, a current location measure that measures a current location using the signal received from the GPS satellite, and a current location information notifier that notifies a cellular wireless network of the current location measured in the current location measurer. According to this configuration, the cellular wireless network is capable of acquiring location information with high accuracy, thus decreasing the number of wireless networks of authentication information notification destination, and thereby reducing processing time to notify the authentication information.

A wireless communication system of another aspect of the invention adopts a configuration provided with the cellular wireless network having the above-mentioned configuration, the authentication apparatus having the above-mentioned configuration, the wireless terminal apparatus having the above-mentioned configuration, and the radio base station having the above-mentioned configuration. According to this configuration, it is possible to provide a wireless communication system where the authentication time is reduced in migration of the wireless terminal apparatus inside the same wireless LAN network or different wireless LAN networks, and quality deterioration does not occur such as packet loss due to handover between wireless networks.

An authentication provider unit of another aspect of the invention is an authentication provider unit that manages entire wireless networks, and adopts a configuration provided with the centralized management authentication apparatus having the above-mentioned configuration. According to this configuration, it is possible to provide an authentication provider unit where the authentication time is reduced in migration of the wireless terminal apparatus inside the same wireless LAN network or different wireless LAN networks, and quality deterioration does not occur such as packet loss due to handover between wireless networks.

An authentication provider unit of another aspect of the invention adopts a configuration provided with the above-mentioned configuration and with a location management apparatus that manages the service area information of each of a plurality of wireless networks and current location information of a wireless terminal apparatus, where the location management apparatus acquires the location information of the wireless terminal apparatus from a cellular wireless network that performs location management of the wireless terminal apparatus. According to this configuration, the cellular wireless network has the function of identifying the current location of the wireless terminal apparatus based on a cellular-area basis, and it is possible to acquire the current location information of the wireless terminal apparatus from the location management apparatus that manages the current location information of the wireless terminal apparatus identified by the function. Accordingly, the need is eliminated for having the function of acquiring the current location information of the wireless terminal apparatus, and it is possible to keep the equipment cost low corresponding to such an eliminated need.

A wireless communication system of another aspect of the invention adopts a configuration provided with the authentication apparatus having the above-mentioned configuration, the wireless terminal apparatus having the above-mentioned configuration, the radio base station having the above-mentioned configuration, and the authentication provider unit having the above-mentioned configuration. According to this configuration, it is possible to provide a wireless communication system where the time is reduced that is required for authentication performed when the wireless terminal apparatus moves between different wireless networks, and quality deterioration does not occur such as packet loss due to handover between the wireless networks.

A wireless terminal authentication method of still another aspect of the invention is a wireless terminal authentication method in a wireless communication system comprised of a plurality of wireless networks each having at least one radio base station, is of acquiring location information of a wireless terminal apparatus and service area information of each of the plurality of wireless networks, identifying at least one of the wireless networks that provides communication services in a peripheral area of a location where the wireless terminal apparatus exists based on the acquired location information of the wireless terminal apparatus and service area information of each of the wireless networks, and notifying the identified wireless network of authentication information of the wireless terminal apparatus before the wireless terminal apparatus moves to the network. According to this method, at least one wireless network that provides communication services around the current location of the wireless terminal apparatus is specified based on the location information of the wireless terminal apparatus and service area information of each of wireless networks, and the authentication information for use in authentication of the wireless terminal apparatus is notified to the identified at least one wireless network before the wireless terminal apparatus moves to the network. Therefore, the authentication time is shortened in migration of the wireless terminal apparatus inside the same wireless LAN network or different wireless LAN networks, the interval required for handover is thereby reduced, and quality deterioration does not occur such as packet loss due to the handover.

This application is based on the Japanese Patent Application No.2003-022039 filed on January 30, 2003, entire content of which is expressly incorporated by reference herein.

### Industrial Applicability

The present invention is useful as a centralized management authentication apparatus and wireless terminal authentication method which shorten the authentication time in migration of the wireless terminal apparatus inside the same wireless network or different wireless networks, thereby reduce the interval required for handover, and as a result, eliminate occurrences of quality deterioration such as packet loss due to the handover.

## Claims

1. A centralized management authentication apparatus that performs centralized management of authentication to enable a wireless terminal apparatus to perform roaming on a plurality of wireless networks each having at least one radio base station, comprising:
an information acquirer that acquires service area information of each of the plurality of wireless networks and information of a current location of the wireless terminal apparatus;
an authentication information notification destination searcher that specifies at least one of the wireless networks that provides communication services in a peripheral area of the current location of the wireless terminal apparatus based on the acquired service area information and information of the current location; and
an authentication information manager thatnotifies authentication information required for authentication of the wireless terminal apparatus to the at least one of the wireless networks specified in the authentication information notification destination searcher before the wireless terminal apparatus moves to the at least one of the wireless networks.

2. The centralized management authentication apparatus according to claim 1, wherein the plurality of wireless networks has a cellular wireless network provided with a function of managing the location of the wireless terminal apparatus, and the authentication information notification destination searcher acquires the information of the current location of the wireless terminal apparatus from the cellular wireless network.

3. The centralized management authentication apparatus according to claim 1, wherein the authentication information manager notifies one of the wireless networks that requests the authentication information of the authentication information generated by an authentication information generating apparatus of the cellular wireless network.

4. The centralized management authentication apparatus according to claim 2, wherein the authentication information notification destination searcher acquires the service area information of each of the wireless networks from the cellular wireless network.

5. The centralized management authentication apparatus according to claim 2, wherein a location management apparatus of the cellular wireless network manages the service area information and the information of the current location of the wireless terminal apparatus, and based on the service area information and wireless terminal location information managed by the location management apparatus of the cellular wireless network, the authentication information notification destination searcher specifies at least one of the wireless networks that provides communication services in a peripheral area of the current location of the wireless terminal apparatus.

6. A cellular wireless network comprising the centralized management authentication apparatus according to claim 1.

7. An authentication apparatus comprising:
an authentication information holder that holds authentication information obtained by making a request for authentication information to a centralized management authentication apparatus that performs centralized management of authentication in movement to each of a plurality of wireless networks of a wireless terminal apparatus; and
an authentication performer that uses the authentication information held in the authentication information holder in authentication of the wireless terminal apparatus in a service area of a movement destination when the wireless terminal apparatus moves between service areas of a wireless network to which the authentication apparatus belongs.

8. A wireless terminal apparatus comprising:
a receiver that receives a signal transmitted from a GPS (Global Positioning System) satellite;
a current location measure that measures a current location using the signal received from the GPS satellite; and
a current location information notifier that notifies a cellular wireless network of the current location measured in the current location measurer.

9. A radio base station constituting a wireless network, comprising:
a receiver that receives a signal transmitted from a GPS (Global Positioning System) satellite;
a current location measure that measures a current location using the signal received from the GPS satellite; and
a current location information notifier that notifies a cellular wireless network of the current location measured in the current location measurer.

10. A wireless communication system comprising:
the cellular wireless network according to claim 6;
the authentication apparatus according to claim 7;
the wireless terminal apparatus according to claim 8; and
the radio base station according to claim 9.

11. An authentication provider unit that manages entire wireless networks, comprising the centralized management authentication apparatus according to claim 1.

12. The authentication provider unit according to claim 11, further comprising:
a location management apparatus that manages the service area information of each of a plurality of wireless networks and current location information of a wireless terminal apparatus,
wherein the location management apparatus acquires the location information of the wireless terminal apparatus from a cellular wireless network that performs location management of the wireless terminal apparatus.

13. A wireless communication system comprising:
the authentication apparatus according to claim 7;
the wireless terminal apparatus according to claim 8;
the radio base station according to claim 9; and
the authentication provider unit according to claim 11.

14. A wireless terminal authentication method in a wireless communication system comprised of a plurality of wireless networks each having at least one radio base station, comprising:
an information acquiring step of acquiring location information of a wireless terminal apparatus and service area information of each of the plurality of wireless networks;
an identifying step of identifying at least one of the wireless networks that provides communication services in a peripheral area of a location where the wireless terminal apparatus exists based on the acquired location information of the wireless terminal apparatus and service area information of each of the plurality of wireless networks; and
an authentication information notifying step of notifying the identified wireless network of authentication information of the wireless terminal apparatus before the wireless terminal apparatus moves to the network.
